# DEMANDE DE BREVET EUROPEEN

(11) **EP 4 821 629 A1**
(43) Date de publication de la demande: **14.10.2026**
(21) Numéro de dépôt: 26167848.6
(22) Date de dépôt: 25.03.2026
(51) Int. Cl.: B23K 11/31, B23K 11/10, B23K 11/28, B23K 11/36, B23K 37/02, B23K 101/00

(54) **MACHINE DE SOUDAGE COMPRENANT UN DISPOSITIF DE BLOCAGE D'UN CÂBLE D' ÉQUILIBREUR**

(30) Priorité: 09.04.2025 FR 2503797
(71) Demandeur: GYS, 53940 Saint-Berthevin Cedex (FR)
(72) Inventeur: BOUYGUES, Bruno, 75016 Paris (FR); GABILLARD, Mickael, 53970 Montigné le Brillant (FR); EMERY, Thomas, 35530 Servon sur Vilaine (FR); MANCEAU, David, 53230 Cossé le Vivien (FR)
(74) Mandataire: Vidon Brevets & Stratégie

(57) **Abrégé**

L'invention concerne une machine (100) de soudage comprenant une potence (110) et une pince (120) de soudage couplée à la potence (110) par l'intermédiaire d'un équilibreur intégrant un câble présentant une extrémité d'accrochage à laquelle la pince (120) de soudage est accrochée de manière amovible, caractérisée en ce que la machine (100) de soudage comprend un dispositif de blocage dudit câble d'équilibreur, pour immobiliser l'extrémité d'accrochage par rapport à la potence (120) de sorte à empêcher une remontée de l'extrémité d'accrochage vers la potence (110) lorsque la pince (120) est décrochée du câble.

## Description

### Domaine de l'invention

Le domaine de l'invention est celui de la conception et de la fabrication de dispositifs de soudage.

Plus particulièrement, l'invention concerne en particulier un dispositif de soudage comprenant un dispositif de blocage d'un câble d'équilibreur.

### Etat de la technique

Dans le domaine des machines de soudage plusieurs catégories existent parmi lesquelles les machines de soudage à assistance comprenant une potence et une pince reliée à la potence. Ce type de machine permet ainsi à l'utilisateur, c'est-à-dire le soudeur, de ne pas avoir à porter la pince qui peut présenter un poids compris entre 8 kg et 15 kg. Ainsi, l'utilisateur peut manipuler aisément la pince pour réaliser ses opérations de soudage tout en évitant une fatigue rapide et, à terme, l'apparition de troubles musculosquelettiques.

Les machines de soudage à assistance sont notamment utilisées pour les opérations de soudage par points durant lesquelles l'utilisateur déplace la pince le long d'une trajectoire selon laquelle plusieurs points de soudage sont réalisés.

Cette technique de soudage est particulièrement utilisée dans le domaine de l'automobile.

Classiquement, les dispositifs de soudage à assistance comprennent un équilibreur assurant la liaison entre la potence et la pince de soudage.

Un équilibreur comprend classiquement :
- un câble présentant une extrémité d'accrochage à laquelle la pince de soudage est accrochée de manière amovible, et
- un organe de traction configuré pour tracter ladite extrémité d'accrochage vers la potence.

Ainsi, en étant reliée à la potence de manière amovible, la pince peut être détachée afin que l'utilisateur puisse atteindre des zones de travail inaccessibles lorsque la pince est reliée à la potence.

Toutefois, en raison du poids important de la pince, l'effort exercé par l'organe de traction sur le câble s'avère relativement important si bien que lorsque la pince est détachée du câble, le câble subit une remontée rapide et incontrôlée, une telle remontée pouvant provoquer des blessures à l'utilisateur situé à proximité.

En outre, cela a un impact négatif sur l'organe de traction qui peut s'endommager prématurément, obligeant alors à son remplacement rapide pour ne pas nuire à la productivité.

Pour prévenir ces risques, certains équilibreurs sont équipés de moyens de freinage permettant de limiter voire interrompre l'action de l'organe de traction lorsque la pince est décrochée.

Toutefois, de tels moyens de freinage présentent un encombrement relativement important ce qui nuit à la compacité de l'équilibreur et donc de la machine qui peut alors être difficile à déplacer, voire être inutilisable dans des espaces exigus.

Par ailleurs, les moyens de freinage connus ne sont pas compatibles avec un organe de traction prenant la forme d'un ressort taré en fonction du poids de la pince pour la maintenir à une hauteur déterminée.

Dès lors, il convient à l'utilisateur de veiller à maintenir le câble pour accompagner sa remontée de manière sécurisée sous l'effet de l'organe de traction dès lors qu'il décroche la pince du câble. En effet, le ressort exerce un effort continu de traction de sorte à permettre le maintien à hauteur constante de la pince de soudage.

Cependant cela s'avère difficile en utilisation puisque l'utilisateur doit tenir la pince d'une main (la pince ayant généralement un poids compris entre 8 kg et 15 kg comme précisé précédemment) et retenir le câble de l'autre main.

Il existe donc un besoin de sécuriser les machines de soudage pour empêcher la remontée du câble lorsque la pince est détachée.

### Objectifs de l'invention

L'invention a notamment pour objectif de pallier les inconvénients de l'art antérieur.

Plus précisément, l'invention a pour objectif de proposer une solution permettant d'éviter la remontée incontrôlée d'un câble d'accrochage d'une pince sur une machine de soudage.

L'invention a également pour objectif de fournir une telle solution qui soit contrôlable à distance.

L'invention a par ailleurs pour objectif de fournir une telle solution qui soit simple de conception, de réglage et d'utilisation.

L'invention a en outre pour objectif de fournir une telle solution qui soit peu énergivore.

### Exposé de l'invention

Ces objectifs, ainsi que d'autres qui apparaîtront par la suite, sont atteints grâce à l'invention qui a pour objet une machine de soudage comprenant une potence et une pince de soudage couplée à la potence par l'intermédiaire d'un équilibreur intégrant :
- un câble présentant une extrémité d'accrochage à laquelle la pince de soudage est accrochée de manière amovible, et
- un organe de traction configuré pour tracter ladite extrémité d'accrochage vers la potence,
caractérisée en ce que la machine de soudage comprend un dispositif de blocage dudit câble d'équilibreur, ledit dispositif de blocage intégrant un organe de pincement positionné entre l'organe de traction et l'extrémité d'accrochage du câble, l'organe de pincement étant destiné à pincer le câble pour immobiliser l'extrémité d'accrochage par rapport à la potence de sorte à empêcher une remontée de l'extrémité d'accrochage vers la potence lorsque la pince est décrochée du câble.

Le dispositif de blocage permet ainsi une utilisation de la machine en toute sécurité pour l'utilisateur.

En effet, l'utilisateur peut décrocher la pince sans risques que le câble ne le blesse en remontant de manière incontrôlée.

Par ailleurs le blocage du câble bénéficie à l'intégrité de la machine puisque la remontée incontrôlée du câble engendre une dégradation de l'équilibreur.

Selon un aspect avantageux, la machine comprend également un bouton d'actionnement de l'organe de pincement.

Ce bouton d'actionnement permet de contrôler l'organe de pincement pour libérer le câble, ou au contraire le bloquer, en fonction du besoin de l'utilisateur.

Selon un autre aspect avantageux, le bouton d'actionnement est porté par la pince de soudage.

Le positionnement du bouton sur la pince permet à l'utilisateur de contrôler la remontée du câble en étant à distance de la machine, notamment lorsqu'il effectue une opération de soudage éloignée de la machine.

L'utilisation de la machine est alors facilitée pour l'utilisateur.

Selon un autre aspect avantageux, le dispositif de blocage comprend également un organe de détection d'une absence d'accrochage de la pince sur l'extrémité d'accrochage du câble, ledit dispositif de blocage étant configuré pour bloquer l'organe de pincement dans un état de pincement du câble lorsqu'une absence d'accrochage est détectée par l'organe de détection.

L'organe de détection d'absence permet de bloquer le câble sans intervention dédiée de l'utilisateur.

La facilité d'utilisation de la machine et la sécurité de l'utilisateur sont ainsi grandement accrues.

En effet, le blocage du câble devient transparent pour l'utilisateur qui n'a alors qu'à se concentrer sur ses opérations de soudage et peut décrocher la pince sans risques pour sa sécurité.

Selon un autre aspect avantageux, l'organe de détection comprend un corps, une tête au travers de laquelle circule le câble et un organe de rappel, la tête étant mobile par rapport au corps entre :
- une première position dans laquelle la tête comprime l'organe de rappel sous l'effet du poids de la pince accrochée à l'extrémité d'accrochage du câble, et
- une deuxième position dans laquelle la tête est déplacée par rapport au corps par l'intermédiaire de l'organe de rappel qui tend à recouvrer une configuration non comprimée en l'absence d'accrochage de la pince sur l'extrémité d'accrochage du câble,
ledit dispositif de blocage bloquant l'organe de pincement dans son état de pincement lorsque la tête est dans sa deuxième position.

Un tel organe de détection est simple de conception et d'utilisation et permet le blocage du câble par simple détection de l'absence du poids de la pince.

Par ailleurs, lorsque l'utilisateur soulève la pince pour changer de position, il n'y a pas de risques que la remontée du câble par l'équilibreur exerce une force sur la pince pouvant alors déséquilibrer l'utilisateur.

Selon un autre aspect avantageux, l'organe de pincement est alimenté pneumatiquement pour adopter un état de libération du câble depuis son état de pincement, l'organe de détection étant intégré à un circuit d'alimentation pneumatique de l'organe de pincement et étant configuré pour interrompre l'alimentation en air du dispositif de pincement lorsque la tête est dans sa deuxième position.

L'utilisation d'une énergie pneumatique pour le blocage offre une réactivité importante à l'organe de blocage pour assurer la sécurité de l'utilisateur tout en assurant une force suffisante pour libérer le câble.

Selon un autre aspect avantageux, le dispositif de blocage comprend une unité électronique et l'organe de détection se présente sous la forme d'un capteur à effet hall positionné au niveau de l'extrémité d'accrochage du câble et configuré pour détecter un écartement de la pince par rapport à l'extrémité d'accrochage du câble, l'unité électronique pilotant l'organe de pincement en fonction de données fournies par ledit capteur à effet hall.

Une telle solution permet une détection efficace du décrochement de la pince en cours d'utilisation de la machine.

Par ailleurs, cette technologie est simple de mise en oeuvre et peu onéreuse, ce qui la rend attractive pour les fabricants de machines de soudage.

Selon un autre aspect avantageux, le dispositif de blocage comprend une unité électronique et l'organe de détection se présente sous la forme d'un capteur de tension du câble, l'unité électronique pilotant l'organe de pincement en fonction de données fournies par ledit capteur de tension.

Une telle solution est également simple de mise en oeuvre et permet de détecter l'absence de poids en bout de câble, c'est-à-dire le décrochement de la pince.

En effet, lorsque la pince est décrochée, le câble se détend, cette détente étant captée par le capteur de tension pour piloter l'organe de blocage.

Selon un autre aspect avantageux, l'organe de traction se présente sous la forme d'un enrouleur de câble, le dispositif de blocage comprend une unité électronique et l'organe de détection se présente sous la forme d'un capteur de vitesse de l'enrouleur, configuré pour mesurer une vitesse d'enroulage du câble, l'unité électronique pilotant l'organe de pincement en fonction de données fournies par ledit capteur de vitesse.

Cette solution permet de limiter les risques de remontée incontrôlée tout en autorisant les mouvements de la pince pour l'utilisateur, par exemple en soulevant la pince.

Selon un autre aspect avantageux, l'organe de pincement comprend deux mors entre lesquels circule le câble, l'un au moins des mors étant mobile par rapport à l'autre, l'organe de pincement pouvant adopter un état de libération dans lequel les mors sont éloignés l'un de l'autre permettant une circulation libre du câble entre les mors, et un état de pincement dans lequel les mors sont rapprochés l'un de l'autre pour pincer le câble entre eux.

L'utilisation des deux mors permet un blocage efficace du câble pour empêcher sa remontée.

Selon un autre aspect avantageux, les mors présentent une surface crantée destinée à venir au contact du câble pour le bloquer.

La surface crantée est particulièrement adaptée à l'utilisation de câbles souples, notamment des câbles en nylon tressé.

Selon un autre aspect avantageux, l'organe de pincement comprend un élément de rappel configuré pour rapprocher les deux mors l'un de l'autre et ainsi positionner l'organe de pincement dans son état de pincement.

Cela répond encore à la sécurité d'utilisation de la machine puisque l'organe de blocage est configuré pour assurer le blocage du câble sans sollicitation pour permettre la libération du câble.

En d'autres termes, l'organe de blocage est normalement fermé et seule une consigne de déblocage permet de libérer le câble pour autoriser sa remontée.

Selon un autre aspect avantageux, l'organe de pincement comprend un dispositif mécanique de déverrouillage permettant de positionner et de maintenir l'organe de pincement dans son état de libération depuis son état de pincement.

### Figures

D'autres caractéristiques et avantages de l'invention apparaîtront plus clairement à la lecture de la description suivante de modes de réalisation préférentiels de l'invention, donnés à titre d'exemples illustratifs et non limitatifs, et des dessins annexés décrits ci-après.
[Fig. 1] La figure 1 est une représentation schématique en perspective d'une machine de soudage selon l'invention.
[Fig. 2] La figure 2 est une représentation schématique en perspective d'un détail de la machine selon l'invention, illustrant une potence intégrant un équilibreur.
[Fig. 3] La figure 3 est une représentation schématique de la potence de la machine de soudage selon l'invention, illustrant un dispositif de blocage d'un câble d'équilibreur selon un premier mode de réalisation.
[Fig. 4] La figure 4 une représentation schématique illustrant le fonctionnement du dispositif de blocage d'un câble d'équilibreur selon le premier mode de réalisation.
[Fig. 5] La figure 5 est une représentation schématique de la potence de la machine de soudage selon l'invention, illustrant un dispositif de blocage d'un câble d'équilibreur selon un deuxième mode de réalisation.
[Fig. 6] La figure 6 une représentation schématique d'une variante de réalisation d'un organe de pincement du dispositif de blocage d'un câble d'équilibreur de la machine de soudage selon l'invention.

### Description détaillée de l'invention

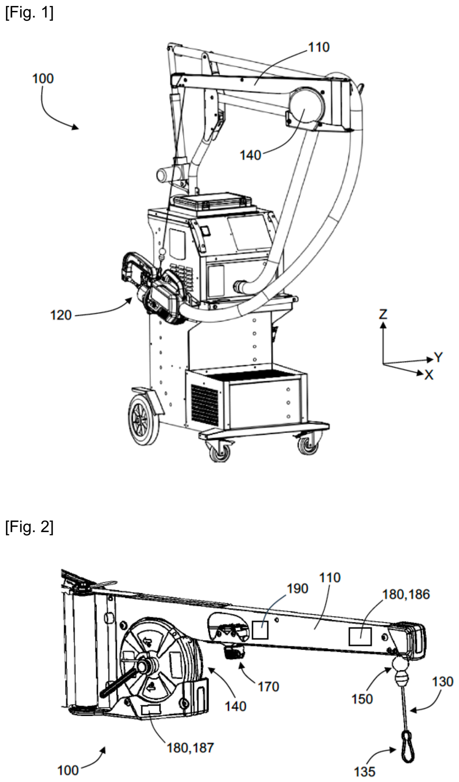

En référence à la figure 1, une machine 100 de soudage est décrite.

Tel que représenté sur la figure 1, on définit un repère orthonormé comprenant trois axes X, Y et Z perpendiculaires entre eux, les axes X et Y formant un plan horizontal sensiblement parallèle à une surface sur laquelle repose la machine 100 de soudage et l'axe Z, perpendiculaire au plan horizontal, définit une direction verticale.

La machine 100 comprend une potence 110 et une pince 120 de soudage couplée à la potence 110.

Plus précisément, la pince 120 de soudage est couplée à la potence 110 par l'intermédiaire d'un équilibreur.

En référence aux figures 2, 3 et 5, l'équilibreur intègre :
- un câble 130 ;
- un organe de traction 140 du câble.

Le câble 130 présente une extrémité d'accrochage 135 à laquelle la pince 120 de soudage est accrochée de manière amovible. Tel que cela est visible sur les figures 2, 3 et 5, le câble 130 s'étend sensiblement horizontalement depuis l'organe de traction 140 jusqu'à une ou plusieurs poulie(s) 160, puis sensiblement verticalement depuis la poulie 160 en sortant de la potence 110.

L'organe de traction 140 est configuré pour tracter l'extrémité d'accrochage 135 du câble 130 vers la potence 110. Ainsi, par un effort de traction du câble 130, l'organe de traction 140 permet de maintenir en une hauteur souhaitée la pince 120, soulageant alors l'utilisateur (par exemple un technicien de soudage) d'un effort consistant à porter la pince 120 de soudage.

Selon les différents modes de réalisation illustrés par les figures 1 à 5, l'organe de traction 140 se présente sous la forme d'un enrouleur de câbles. En variante, d'autres systèmes ad hoc pourraient également être utilisés pour permettre un effort de traction du câble 130.

L'organe de traction 140 intègre classiquement un ressort taré en fonction du poids de la pince 120 de sorte à maintenir à une hauteur constante la pince 120 par rapport au sol, c'est-à-dire selon l'axe Z. Pour descendre la pince 120, l'utilisateur appuie sur la pince 120 de sorte à éloigner l'extrémité d'accrochage 135 du câble 130 de la potence 110.

Plus spécifiquement, la remontée ou la descente de la pince 120 est effectuée relativement au sol sur lequel la machine 100 de soudage repose.

Comme évoqué précédemment, la pince 120 peut être désolidarisée du câble 130.

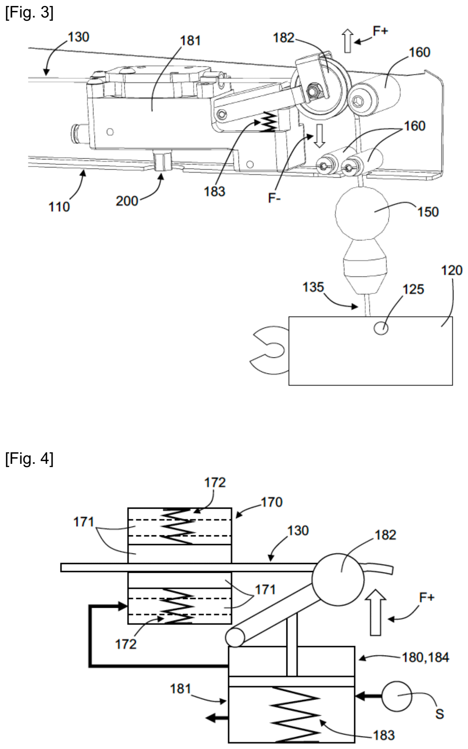

Lorsque la pince 120 est désolidarisée du câble 130, l'organe de traction 140 provoque une remontée rapide et incontrôlée du câble 130 puisqu'il n'y a plus de poids accroché à l'extrémité d'accrochage 135. Cette remontée est incontrôlée en ce que le câble 130, notamment l'extrémité d'accrochage 135 peut se déplacer dans toutes les directions à cause de la vitesse de remontée du câble 130, au risque de heurter l'utilisateur et de le blesser. La course en remontée du câble est bloquée par une butée 150 solidaire du câble (particulièrement visible sur la figure 3), cette butée venant impacter la potence 110 pour arrêter la remontée du câble sous l'effet de l'organe de traction 140. La venue brutale de la butée 150 contre la potence 110 peut engendrer l'endommagement de la potence 110. Par ailleurs, la remontée rapide et incontrôlée du câble 130 peut endommager l'équilibreur en tant que tel, ce qui a notamment été fréquemment constaté sur les machines de soudages connues.

Pour prévenir tout risque, de blessure de l'utilisateur, la machine 100 de soudage intègre un dispositif de blocage du câble130 d'équilibreur.

En référence aux figures 2 à 6, le dispositif de blocage comprend un organe de pincement 170.

L'organe de pincement 170 est destiné à pincer le câble 130 pour immobiliser l'extrémité d'accrochage 135 par rapport à la potence 110.

Dans une variante de réalisation dite simple, l'organe de pincement 170 est pilotable par l'utilisateur pour pincer et immobiliser le câble 130 préalablement à la désolidarisation de la pince 120 et du câble 130.

Pour cela, la pince 120 comprend un bouton 125 d'actionnement de l'organe de pincement 170. Le bouton 125 d'actionnement permet ainsi le contrôle de l'organe de pincement lorsque l'utilisateur est à distance de la machine 100.

En variante ou en complément du bouton 125 d'actionnement, la machine peut comprendre des moyens de commande de l'organe de pincement 170, par exemple un bouton dédié ou une fonction sur un écran de pilotage de la machine 100 de soudage.

Dans une variante de réalisation dite automatisée, le dispositif de blocage intègre également un organe de détection 180 d'une absence d'accrochage de la pince 120 sur l'extrémité d'accrochage 135 du câble 130. Comme cela sera expliqué par la suite, l'organe de détection forme, au moins en partie, une fonction de sécurité du dispositif de blocage.

Le dispositif de blocage est ainsi configuré pour bloquer l'organe de pincement 170 dans un état de pincement du câble 130 lorsqu'une absence d'accrochage est détectée par l'organe de détection 180.

En conséquence, l'extrémité d'accrochage 135 reste immobilisée dès lors qu'une absence d'accrochage de la pince 120 au câble 130 est détectée, empêchant ainsi les risques de blessure d'un utilisateur par une remontée incontrôlée du câble 130.

Selon un premier mode de réalisation illustré par les figures 3 et 4, l'organe de détection 180 comprend un corps 181 et une tête 182 au travers de laquelle circule le câble 130. La tête 182 forme plus spécifiquement une poulie de guidage du câble 130. La tête 182 est mobile par rapport au corps 181, tel que cela est représenté par la première flèche F+ et la deuxième flèche F- sur la figure 3.

Plus précisément, la tête 182 est mobile entre :
- une première position dans laquelle la tête 182 est dirigée vers un sol sur lequel repose la machine 100, sous l'effet du poids de la pince 120 accrochée à l'extrémité d'accrochage 135 du câble 130, et
- une deuxième position dans laquelle la tête 182 est écartée dudit sol sur lequel repose la machine 100, en cas d'absence de la pince 120 sur l'extrémité d'accrochage 135 du câble 130.

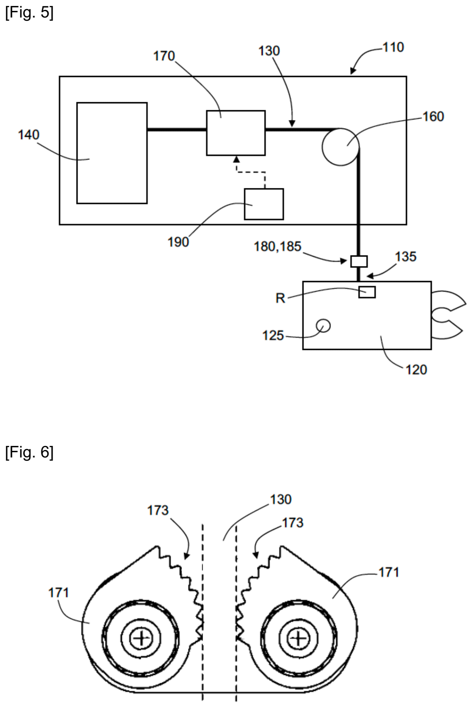

Dans le mode de réalisation illustré par les figures 2 et 3, la tête 182 de l'organe de détection 180 se substitue à la poulie 160 qui permet de modifier l'extension du câble 130 de son extension sensiblement horizontale à son extension sensiblement verticale. En revanche, tel qu'illustré pas la figure 5, c'est une poulie 160 qui permet de modifier l'extension du câble 130 de son extension sensiblement horizontale à son extension sensiblement verticale et non l'organe de détection 180.

L'organe de détection 180 permet le blocage de l'organe de pincement 170 dans son état de pincement lorsque la tête 182 est dans sa deuxième position.

Le passage de la première position à la deuxième position est illustré par la flèche F+ sur la figure 3 et le passage de la deuxième position à la première position est illustré par la flèche F- sur la figure 3.

Tel que cela est particulièrement visible sur la figure 3, l'organe de détection 180 intègre un organe de rappel 183 configuré pour repousser la tête 182 vers sa deuxième position.

Plus en détail, la tête 182 est mobile par rapport au corps 181 entre :
- sa première position dans laquelle la tête 182 comprime l'organe de rappel 183 sous l'effet du poids de la pince 120 accrochée à l'extrémité d'accrochage 135 du câble 130, et
- sa deuxième position dans laquelle la tête 182 est déplacée par rapport au corps 181 par l'intermédiaire de l'organe de rappel 183 qui tend à recouvrer une configuration non comprimée en l'absence d'accrochage de la pince 120 sur l'extrémité d'accrochage 135 du câble130.

Dans ce premier mode de réalisation, l'organe de pincement 170 est alimenté pneumatiquement par une source S pneumatique via un circuit d'alimentation pneumatique comprenant ladite source S. La source S peut être soit fixée directement à la machine 100 de soudage, par exemple une bouteille d'air comprimé, ou commune à plusieurs machines 100 de soudage, par exemple un réseau pneumatique industriel.

L'organe de détection 180 est intégré au circuit d'alimentation pneumatique de l'organe de pincement 170 et forme un clapet 184 autorisant l'alimentation en air du dispositif de pincement 170 lorsque la tête 182 est dans sa première position. L'alimentation en air provoque la libération du câble 130 par l'organe de pincement 170.

En d'autres termes, lorsque la tête 182 est dans sa première position, l'air atteint l'organe de pincement 170 et provoque la libération du câble 130 et donc la mobilité de l'extrémité d'accrochage 135 par rapport à la potence 110. Autrement dit, l'organe de pincement 170 est normalement pinçant, c'est-à-dire qu'en l'absence d'alimentation en air, il pince le câble 130 pour immobiliser l'extrémité d'accrochage 135.

Plus en détail et en référence aux figures 4 et 6, l'organe de pincement 170 comprend deux mors 171 d'ont l'un au moins est mobile par rapport à l'autre.

Sur les figures 4 et 6, les deux mors 171 sont mobiles.

En référence à la figure 4, les traits en pointillés représentent l'organe de pincement 170 dans un état de libération, c'est-à-dire que les mors 171 sont écartés du câble 130.

En revanche, les traits continus représentent l'organe de pincement 170 dans son état de pincement, c'est-à-dire que les mors 171 sont au contact du câble 130 pour le serrer et l'immobiliser.

L'organe de pincement comprend également un élément de rappel 172 configuré pour positionner l'organe de pincement dans son état de pincement, c'est-à-dire rapprocher les deux mors 171 l'un de l'autre afin de pincer le câble 130.

Cet élément de rappel 172 peut se présenter sous la forme d'un ressort de compression ou de tout autre élément permettant le rapprochement des deux mors 171 et donc le pincement du câble 130.

Comme expliqué précédemment, dans l'exemple illustré par la figure 4, l'organe de pincement 170 est normalement pinçant.

En d'autres termes, l'organe de pincement 170 est configuré pour assurer le pincement du câble 130 lorsqu'il n'est pas alimenté en air de sorte à garantir la sécurité d'utilisation de la machine 100.

Ainsi, dès lors que la pince 120 est décrochée du câble 130, la tête 182 de l'organe de détection 180 passe dans sa deuxième position ce qui provoque l'arrêt de l'alimentation en air de l'organe de pincement 170, et donc le déplacement des mors 171 l'un en direction de l'autre sous l'effet de l'élément de rappel 172, pinçant alors le câble 130 pour l'immobiliser.

Si l'utilisateur accroche de nouveau la pince 120 au câble 130, la tête 181 atteint alors sa première position permettant le passage de l'air depuis la source S jusqu'à l'organe de pincement 170 provocant alors l'écartement des mors 171 l'un par rapport à l'autre pour libérer le câble 130 et maintenir la pince 120 à la hauteur déterminée.

Bien entendu, la machine 100 est équipée de moyens de pilotage permettant de couper l'alimentation en air de l'organe de pincement 170 dès lors que le bouton 125 d'actionnement est utilisé, cela indépendamment de la position de la tête 182. Autrement dit, l'appui sur le bouton 125 d'actionnement par l'utilisateur prévaut sur la première position de la tête 182 de l'organe de détection 180 pour permettre le pincement du câble 130 lorsque la pince 120 est toujours solidaire de l'extrémité d'accrochage 135. Cela permet ainsi à l'utilisateur de décrocher la pince 120 en toute sécurité.

Selon trois autres modes de réalisation illustrés par les figures 2 et 5 par exemple, le dispositif de blocage comprend une unité électronique 190. Comme expliqué ci-après, l'unité électronique 190 est couplée à l'organe de détection 180.

Selon un deuxième mode de réalisation illustré par la figure 5, l'organe de détection 180 se présente sous la forme d'un capteur à effet hall 185 positionné au niveau de l'extrémité d'accrochage 135 du câble 130.

Le capteur à effet hall 185 est configuré pour détecter un écartement de la pince 120 par rapport à l'extrémité d'accrochage 135 du câble 130. Plus précisément, l'écartement est mesuré entre le capteur à effet hall 185 et une référence R portée par la pince 120.

L'unité électronique 190 est alors configurée pour piloter l'organe de pincement 170 en fonction de données fournies par ledit capteur à effet hall 185.

Plus spécifiquement, l'unité électronique 190 pilote l'organe de pincement 170 lorsqu'elle reçoit du capteur à effet hall 185 un signal supérieur à une valeur seuil.

Autrement dit, lorsque la valeur d'écartement détectée par le capteur à effet hall 185 est supérieure à une valeur seuil prédéterminée, l'unité électronique 190 pilote l'organe de pincement 170 de sorte à le positionner dans son état de pincement, c'est-à-dire de sorte qu'il agisse sur le câble 130 pour l'immobiliser.

Le pilotage de l'organe de pincement 170 peut par exemple être réalisé par pilotage d'un actionneur intercalé entre la source S pneumatique et l'organe de pincement 170 pour autoriser ou interdire la fourniture d'air à l'organe de pincement 170. En variante, le pilotage de l'organe de pincement 170 peut être réalisé par pilotage d'un moteur électrique couplé à l'un au moins des mors 171 de l'organe de pincement 170.

Selon un troisième mode de réalisation illustré par la figure 2, l'organe de détection 180 se présente sous la forme d'un capteur de tension 186 du câble 130.

L'unité électronique 190 pilote alors l'organe de pincement 170 en fonction de données fournies par ledit capteur de tension 186.

Plus spécifiquement, l'unité électronique 190 pilote l'organe de pincement 170 lorsqu'elle reçoit du capteur de tension 186 un signal de tension inférieur à une valeur seuil.

Autrement dit, lorsque la valeur de tension détectée par le capteur de tension 186 est inférieure à une valeur seuil prédéterminée, l'unité électronique 190 pilote l'organe de pincement 170 de sorte à le positionner dans son état de pincement, c'est-à-dire de sorte qu'il agisse sur le câble 130 pour l'immobiliser.

Lorsqu'elle est accrochée au câble 130, la pince 120 tend le câble 130. En revanche, lorsque la pince 120 est détachée du câble 130, ce dernier se détend. C'est la valeur de tension du câble 130 (également appelée raideur) qui est mesurée par le capteur de tension 186.

Le pilotage de l'organe de pincement 170 peut par exemple être réalisé par pilotage d'un actionneur intercalé entre la source S pneumatique et l'organe de pincement 170 pour autoriser ou interdire la fourniture d'air à l'organe de pincement 170. En variante, le pilotage de l'organe de pincement 170 peut être réalisé par pilotage d'un moteur électrique couplé à l'un au moins des mors 171 de l'organe de pincement 170.

Selon un quatrième mode de réalisation illustré par la figure 2, l'organe de détection 180 se présente sous la forme d'un capteur de vitesse 187 de l'enrouleur, c'est-à-dire de l'organe de traction 140.

Le capteur de vitesse 187 est configuré pour mesurer une vitesse d'enroulage du câble 130, c'est-à-dire la vitesse de l'enrouleur.

L'unité électronique 190 pilote alors l'organe de pincement 170 en fonction de données fournies par ledit capteur de vitesse 187.

Plus spécifiquement, l'unité électronique 190 pilote l'organe de pincement 170 lorsqu'elle reçoit du capteur de vitesse 187 un signal supérieur à une valeur seuil.

Autrement dit, lorsque la vitesse mesurée par le capteur de vitesse 187 est supérieure à une valeur seuil prédéterminée, l'unité électronique 190 pilote l'organe de pincement 170 de sorte à le positionner dans son état de pincement, c'est-à-dire de sorte qu'il agisse sur le câble 130 pour l'immobiliser.

En effet, lorsque la pince 120 est reliée au câble 130, la vitesse de l'enrouleur est réduite, voire nulle, à cause de l'effort résistant formé par le poids de la pince 120. En revanche, lorsque la pince 120 est décrochée du câble 130, l'effort résistant est faible et la vitesse de l'enrouleur s'accélère.

Le pilotage de l'organe de pincement 170 peut par exemple être réalisé par pilotage d'un actionneur intercalé entre la source S pneumatique et l'organe de pincement 170 pour autoriser ou interdire la fourniture d'air à l'organe de pincement 170. En variante, le pilotage de l'organe de pincement 170 peut être réalisé par pilotage d'un moteur électrique couplé à l'un au moins des mors 171 de l'organe de pincement 170.

Comme expliqué précédemment, l'organe de pincement 170 comprend deux mors 171 d'ont l'un au moins est mobile par rapport à l'autre.

Dans une variante de réalisation illustrée par la figure 6, l'organe de pincement 170 est représenté dans son état de pincement.

Toujours en référence à la figure 6, les mors 171 comprennent une surface crantée 173 destinée à venir au contact du câble 130 pour le bloquer.

L'organe de pincement 170 illustré par la figure 6 est particulièrement adapté pour des câbles 130 de type souple, par exemple des câbles en nylon tressé ou des cordes.

Au contraire, l'organe de pincement 170 illustré par la figure 4 est particulièrement adapté à des câbles métalliques, par exemple des filins.

En référence à la figure 3, l'organe de pincement 170 comprend un dispositif 200 mécanique de déverrouillage permettant de positionner et de maintenir l'organe de pincement 170 dans son état de libération depuis son état de pincement.

Tel qu'illustré par la figure 3, le dispositif 200 se présente sous la forme d'une vis présentant une empreinte hexagonale manipulable par un outil tel qu'une clé.

En manipulant le dispositif 200, un utilisateur peut écarter les deux mors 171 l'un de l'autre à l'encontre de l'élément de rappel 172, et ainsi libérer le câble 130. Le déplacement des mors 171 par manipulation du dispositif 200 provoque leur maintien écarté l'un par rapport à l'autre. En d'autres termes, lorsque les mors 171 écartés l'un par rapport à l'autre par manipulation du dispositif 200, ils sont verrouillés en position écartée tant que le dispositif 200 n'est pas manipulé de nouveau.

Ainsi, le dispositif 200 étant du type mécanique, seule une manipulation en sens inverse peut provoquer le déverrouillage des mors 171 et ainsi le retour à l'état de pincement de l'organe de pincement 170.

La machine 100 de soudage qui vient d'être décrite offre une utilisation sécurisée à l'utilisateur.

En effet, lorsqu'il décroche la pince 120 du câble 130 l'utilisateur ne risque pas d'être blessé par la remontée incontrôlée du câble 130 puisque le dispositif de blocage bloque immédiatement le câble 130 en position.

Ainsi, l'utilisateur peut manipuler la pince 120 de soudage sans risque d'être blessé.

Par ailleurs, la présence de l'organe de détection permet à l'utilisateur une utilisation de la machine 100 en toute sécurité lorsqu'il détache la pince 120 du câble 130 sans avoir actionné le bouton 125 d'actionnement préalablement au détachement de la pince 120. En effet, l'organe de détection 180 permet de détecter le détachement de la pince 120 et donc d'agir sur l'organe de pincement 170 pour assurer l'immobilisation du câble 130.

La présence de l'organe de détection 180 est d'autant plus avantageuse lorsque le bouton 125 d'actionnement permet à la fois de piloter l'organe de pincement 170 pour pincer le câble 130 et pour libérer le câble 130. En effet, si l'utilisateur actionne le bouton 125 d'actionnement par inadvertance alors que la pince 120 est décrochée du câble 130, l'organe de détection 180 permet de maintenir en position de pincement l'organe de pincement 180 de sorte que le câble 130 reste immobilisé et ne remonte pas de manière incontrôlée.

De plus, le dispositif de blocage est simple de conception, de réglage et d'utilisation et ne nécessite pas de certification longue et coûteuse.

Enfin, le dispositif de blocage s'avère peu énergivore puisqu'il utilise des ressources énergétiques supplémentaires uniquement pour le déplacement des mors 171. En effet, l'alimentation de l'organe de détection 180, et éventuellement de l'unité électronique 190, peut être réalisée par des batteries puisque leur consommation énergétique est faible.

## Revendications

1. Machine (100) de soudage comprenant une potence (110) et une pince (120) de soudage couplée à la potence (110) par l'intermédiaire d'un équilibreur intégrant :
- un câble (130) présentant une extrémité d'accrochage (135) à laquelle la pince (120) de soudage est accrochée de manière amovible, et
- un organe de traction (140) configuré pour tracter ladite extrémité d'accrochage (135) vers la potence (120), **caractérisée en ce que** la machine (100) de soudage comprend un dispositif de blocage dudit câble (130) d'équilibreur, ledit dispositif de blocage intégrant un organe de pincement (170) positionné entre l'organe de traction (140) et l'extrémité d'accrochage (135) du câble (130), l'organe de pincement (170) étant destiné à pincer le câble (130) pour immobiliser l'extrémité d'accrochage (135) par rapport à la potence (120) de sorte à empêcher une remontée de l'extrémité d'accrochage (135) vers la potence (110) lorsque la pince (120) est décrochée du câble (130).

2. Machine (100) selon la revendication précédente, **caractérisée en ce qu'**elle comprend également un bouton (125) d'actionnement de l'organe de pincement (170).

3. Machine (100) selon la revendication précédente, **caractérisée en ce que** le bouton (125) d'actionnement est porté par la pince (120) de soudage.

4. Machine (100) selon l'une quelconque des revendications précédentes, **caractérisée en ce que** le dispositif de blocage comprend également un organe de détection (180) d'une absence d'accrochage de la pince (120) sur l'extrémité d'accrochage (135) du câble (130), ledit dispositif de blocage étant configuré pour bloquer l'organe de pincement (170) dans un état de pincement du câble (130) lorsqu'une absence d'accrochage est détectée par l'organe de détection (180).

5. Machine (100) selon la revendication précédente, **caractérisée en ce que** l'organe de détection (180) comprend un corps (181), une tête (182) au travers de laquelle circule le câble (180) et un organe de rappel (183), la tête (182) étant mobile par rapport au corps (181) entre :
- une première position dans laquelle la tête (182) comprime l'organe de rappel (183) sous l'effet du poids de la pince (120) accrochée à l'extrémité d'accrochage (135) du câble (130), et
- une deuxième position dans laquelle la tête (182) est déplacée par rapport au corps (181) par l'intermédiaire de l'organe de rappel (183) qui tend à recouvrer une configuration non comprimée en l'absence d'accrochage de la pince (120) sur l'extrémité d'accrochage (135) du câble (130), ledit dispositif de blocage bloquant l'organe de pincement (170) dans son état de pincement lorsque la tête (182) est dans sa deuxième position.

6. Machine (100) selon la revendication 5, **caractérisée en ce que** l'organe de pincement (170) est alimenté pneumatiquement pour adopter un état de libération du câble (130) depuis son état de pincement, l'organe de détection (180) étant intégré à un circuit d'alimentation pneumatique de l'organe de pincement (170) et étant configuré pour interrompre l'alimentation en air de l'organe de pincement (170) lorsque la tête (182) est dans sa deuxième position.

7. Machine (100) selon la revendication 4, **caractérisée en ce que** le dispositif de blocage comprend une unité électronique (190) et l'organe de détection (180) se présente sous la forme d'un capteur à effet hall (185) positionné au niveau de l'extrémité d'accrochage (135) du câble (130) et configuré pour détecter un écartement de la pince (120) par rapport à l'extrémité d'accrochage (135) du câble (130), l'unité électronique (190) pilotant l'organe de pincement (170) en fonction de données fournies par ledit capteur à effet hall (185).

8. Machine (100) selon la revendication 4, **caractérisée en ce que** le dispositif de blocage comprend une unité électronique (190) et l'organe de détection (180) se présente sous la forme d'un capteur de tension (186) du câble (130), l'unité électronique (190) pilotant l'organe de pincement (170) en fonction de données fournies par ledit capteur de tension (186).

9. Machine (100) selon la revendication 4, **caractérisée en ce que** l'organe de traction (140) se présente sous la forme d'un enrouleur de câble, le dispositif de blocage comprend une unité électronique (190) et l'organe de détection (180) se présente sous la forme d'un capteur de vitesse (187) de l'enrouleur, configuré pour mesurer une vitesse d'enroulage du câble (130), l'unité électronique (190) pilotant l'organe de pincement (170) en fonction de données fournies par ledit capteur de vitesse (187).

10. Machine (100) selon l'une quelconque des revendications précédentes, **caractérisée en ce que** l'organe de pincement (170) comprend deux mors (171) entre lesquels circule le câble (130), l'un au moins des mors (171) étant mobile par rapport à l'autre, l'organe de pincement (170) pouvant adopter un état de libération dans lequel les mors (171) sont éloignés l'un de l'autre permettant une circulation libre du câble (130) entre les mors (171), et un état de pincement dans lequel les mors (171) sont rapprochés l'un de l'autre pour pincer le câble (130) entre eux.

11. Machine (100) selon la revendication précédente, **caractérisée en ce que** les mors (171) présentent une surface crantée (173) destinée à venir au contact du câble (130) pour le bloquer.

12. Machine (100) selon la revendication 10 ou la revendication 11, **caractérisée en ce que** l'organe de pincement (170) comprend un élément de rappel (172) configuré pour rapprocher les deux mors (171) l'un de l'autre et ainsi positionner l'organe de pincement (170) dans son état de pincement.

13. Machine (100) selon la revendication précédente, **caractérisée en ce que** l'organe de pincement (170) comprend un dispositif (200) mécanique de déverrouillage permettant de positionner et de maintenir l'organe de pincement (170) dans son état de libération depuis son état de pincement.
